(19) Europäisches Patentamt
European Patent Office
Office européen des brevets

(11) **EP 3 151 626 B1**

(12) **EUROPEAN PATENT SPECIFICATION**

(45) Date of publication and mention
of the grant of the patent:
**15.08.2018 Bulletin 2018/33**

(51) Int Cl.:
***H04W 74/08*** (2009.01)

(21) Application number: **15188099.4**

(22) Date of filing: **02.10.2015**

(54) **DEVICE AND METHOD FOR UPDATING A BACKOFF PARAMETER**

VORRICHTUNG UND VERFAHREN ZUR AKTUALISIERUNG EINES BACKOFF-PARAMETERS

DISPOSITIF ET PROCÉDÉ POUR METTRE À JOUR UN PARAMÈTRE DE TEMPORISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.04.2017 Bulletin 2017/14**

(73) Proprietor: **Huawei Technologies Co., Ltd.
Longgang District
Shenzhen, Guangdong 518129 (CN)**

(72) Inventors:
• **WEITZMAN, Avi
80992 Munich (DE)**
• **KLAUSNER, Ohad
80992 Munich (DE)**
• **EZRI, Doron
80992 Munich (DE)**
• **SUN, Fuqing
80992 Munich (DE)**
• **RUAN, Wei
80992 Munich (DE)**
• **FAN, Ronghu
80992 Munich (DE)**

(74) Representative: **Pfenning, Meinig & Partner mbB
Patent- und Rechtsanwälte
Joachimsthaler Straße 10-12
10719 Berlin (DE)**

(56) References cited:
**WO-A1-2011/093906     WO-A1-2013/185858
WO-A2-2004/077225**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to a device and a method for updating the initial backoff parameter ($ECW_{min}$), in particular to a CSMA-CA (Carrier Sense Multiple Access with Collision Avoidance) device for dynamic optimization of an $ECW_{min}$ parameter.

BACKGROUND

Wireless communication systems are racing towards better data rates and more clients per cell i.e., a higher efficiency in given deployment scenarios. For example in the high-end Wi-Fi market, vendors make a serious effort to design the highest performance access-point (AP).

The IEEE 802.11 standard defines two access methods which are "Distributed Coordination Function" (DCF) and "Point Coordination Function" (PCF). The vast majority of IEEE802.11 devices (up to 11ac), however, use DCF access methods. The throughput efficiency of DCF depends on many parameters, for example number of active devices sharing the same channel and space, data frame length, PHY (physical device) data rate, working mode (RTS/CTS, etc.), QoS modes, collision rate etc. Collision rate determines by number of devices using the media and the initial Contention Window (CW) value used for the backoff algorithm. A binary exponential backoff (BEB) algorithm is used in DCF to access the channel, when Exponent of Contention Window ($2^{CW}$-ECW) is used for the backoff algorithm with initial / minimal ($ECW_{min}$) and maximal ($ECW_{max}$) values.

Selecting "suitable" value of $ECW_{min}$ and $ECW_{max}$ of the backoff algorithm (used in CSMA/CA process) determines the collision probability and the protocol efficiency, especially when a large number of devices (>10) shares the same channel (frequency) and space. The backoff process adds a delay between two frames and therefore reduces the protocol efficiency especially in high PHY rates like 802.11n, 802.11ac devices (HT, VHT), because the backoff overheads are fix in time ($CW * SlotTime$), while data transmit time is short in high PHY rates.

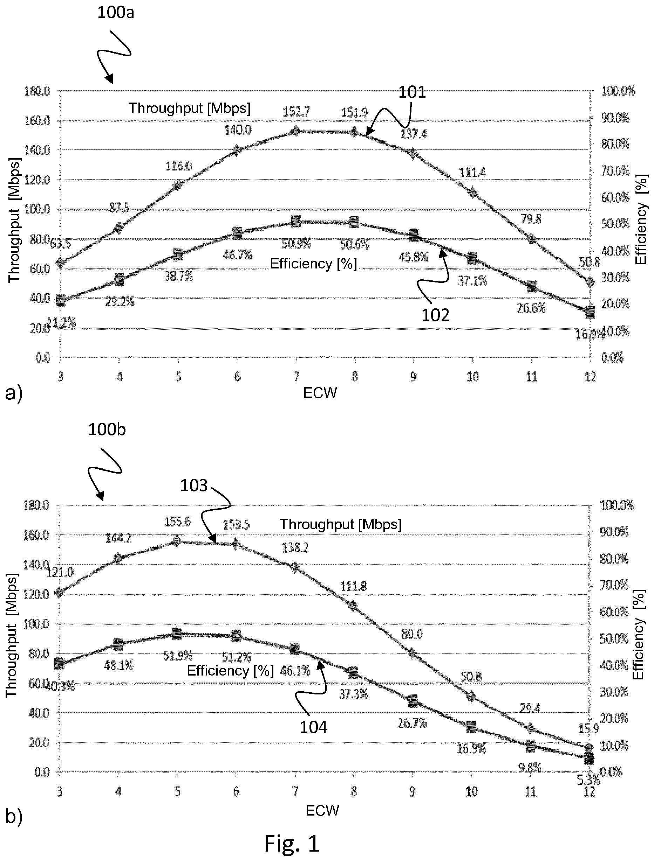

Selecting a "wrong" initial value of ECW ($ECW_{min}$) reduces the traffic efficiency (see Figure 1) due to the following reasons: A lower value (than the optimal) of $ECW_{min}$ increases the collision rate and reduces the system efficiency (need to repeat the Tx). A higher value (than the optimal) of $ECW_{min}$ increases delay ("dead" time) between frames and reduces the system efficiency. Figure 1a shows the data rate versus $ECW_{min}$ for a configuration of 20 clients, 300 Mbps PHY rate and 16 Kbytes frame length. Figure 1b shows the data rate versus $ECW_{min}$ for a configuration of 5 clients, 300 Mbps PHY rate and 16 Kbytes frame length. It can be seen that the throughput is highly dependent on the chosen initial backoff parameter $ECW_{min}$. Selecting a "wrong" or non-optimal value for $ECW_{min}$ reduces the traffic efficiency.

Selecting a "suitable" ECW value depends on many parameters, such as: Number of active devices or number of devices participant in CSMA/CA BEB process i.e., Number of Overlapping APs (OBSS), Number of active clients in the current channel (all APs), Number of active clients in each Access Category (AC) when working with WMM QoS (each AC has different ECW parameters), Data frames transmit time i.e., Frame size, Device data rate, Working mode (A-MPDU size, RTX/CTS), Device type (AP / STA) or DL / UL, Data access category (QoS mode).

It is very difficult to measure or estimate the above parameters, for example: The number of active devices per channel - Even if the number of APs and the associate clients per AP are known, it is difficult to estimate the ratio of associate and active clients due to dynamically changes according to working applications, clients types etc.; Number of active devices per Access Category (AC) - Each data session uses different ACs according to device OS, configuration and application (voice, video, etc.), so it is difficult to estimate active device when working with more than single AC in QoS mode; Estimate the device data frame transmit time (size and MCS) - The transmit TX time depend on the device capabilities (modem and MAC), traffic characteristics, Access Category (AC), etc.

Because the optimal initial ECW value depends on many parameters and it is very difficult to measure them, it is very difficult to estimate the optimal initial ECW value. Even if the ability to estimate all parameters is given, the equation to select the optimal $ECW_{min}$ is very complicated, so it is not realistic to use it in low cost AP.

WO 2011/093906 A1 discusses a system and method for discontinuous wireless communication. The system and method include estimating a first likelihood of channel collisions at start of a discontinuous channel interval, wherein the estimated likelihood of collision is increased when a transmission failure is detected during a portion of one or more previous channel intervals; setting a size of a contention transmission window at start of a current channel interval, according to the first estimated likelihood of channel collisions; estimating a second likelihood of channel collisions for a next channel interval; and dynamically changing the size of the contention transmission window for the next channel interval, according to the second estimated likelihood of channel collisions.

WO 2013/185858 A1 discusses a method and apparatus for dynamically allocating a time delay indicator value and/or random access parameters for sending to a mobile terminal during a Random Access procedure. The time delay indicator value indicates a time delay during which the mobile terminal is restricted from attempting a further Random Access procedure. At least one factor relating to monitored network conditions is determined. The time delay indicator value and/or other random access parameters are allocated on the basis of the factor. The time delay indicator value and/or random access parameters are then sent to the mobile terminal.

SUMMARY

It is an object of the invention to improve a determination of an initial backoff parameter.

This object is achieved by the features of the independent claims. Further implementation forms are apparent from the dependent claims, the description and the figures.

A basic idea of the invention is to apply a novel dynamic backoff parameter ($ECW_{min}$) calculation, based on the data frames transmit success/fail history. The success / fail of the past transmissions are used to calculate new $ECW_{min}$ value.

In order to describe the invention in detail, the following terms, abbreviations and notations will be used:

| | |
|---|---|
| $ECW_{min}$: | Initial backoff parameter |
| CSMA-CA: | Carrier Sense Multiple Access with Collision Avoidance |
| AP: | Access Point |
| PCF: | Point Coordination Function |
| DCF: | Distributed Coordination Function |
| AC: | Access Category |
| MAC: | Media Access Control Layer |
| PHY: | Physical Layer |
| WLAN: | Wireless Local Area Network |
| CW: | Contention Window |
| ECW: | Exponent of Contention Window |
| BEB: | Binary Exponential Backoff |
| QoS: | Quality of Service |
| ACK: | Acknowledgement |

In the following, systems, devices and methods are described that may be applied in WLAN networks. Wireless Local Area Networks (WLANs) are known as a means to provide ad hoc wireless connectivity of mobile communication devices. The IEEE 802.11 WLAN MAC/PHY specification is an international standard for WLANs. The standard describes technical details for the Medium Access Control layer (MAC) and the Physical layer (PHY) of the communication protocol. Two coordination functions are defined in the IEEE 802.11 MAC/PHY standard, the Point Coordination Function (PCF) and the Distributed Coordination Function (DCF). In the PCF, a polling technique is employed by the access points or base stations to query network nodes for any traffic they may have to send. In the DCF, active nodes compete for the use of the channel in a distributed manner via the use of the Carrier Sensing Multiple Access with Collision Avoidance (CSMA/CA) protocol. Packet collisions are not completely eliminated in the IEEE 802.11 MAC/PHY standard due to the distributed nature of the competing nodes and the bursty traffic arrival at the nodes. In the IEEE 802.11 DCF protocol (or CP in PCF), the senders of the colliding packets need to refrain from immediate retransmissions in order to avoid repeated collisions. Thus, each competing node sets up a backoff timer according to a randomly selected backoff time period and enters the backoff state. The backoff time period is selected uniformly between 0 and the Contention Window (CW). In the IEEE 802.11 DCF protocol (and CP in PCF), the CW is dynamically controlled by a backoff algorithm; the Binary Exponential Backoff (BEB) algorithm. In the BEB algorithm, the contention window is doubled every time a node experiences a packet collision, i.e., when the CTS packet or the ACK reply are not received before a timeout occurs. If a node is successful in its packet transmission, the contention window is reset to the minimum value. In order to avoid the contention window from growing too large or shrinking too small, two bounds on CW are defined, the maximum contention window ($CW_{max}$) and the minimum contention window ($CW_{min}$) which are also called backoff parameters hereinafter.

In the following, systems, devices and methods are described that may be applied in CSMA/CA techniques. The IEEE 802.11 DCF (Distributed Coordination Function) uses the Carrier Sense Multiple Access/Collision Avoidance (CSMA/CA) access protocol. A station trying to transmit first checks if the channel is free, waits for the DIFS (Distributed Inter Frame Space) interval, and then transmits if the medium is still free. The receiving station sends an ACK frame after the SIFS (Short Inter Frame Space) interval if the frame is correctly received. When the station senses the channel busy, it waits until it is free and after the DIFS interval, it chooses random backoff **b,** an integer uniformly distributed in the contention window [0,CW] (the default $CW_{min}$ = 31 for 802.11b and $CW_{min}$ = 15 for 802.11g) and counts down for **b** SLOT intervals before attempting to transmit.

In the following, systems, devices and methods for updating a backoff parameter are described. The backoff counter for every station may depend on the collisions and on the successful packet transmissions experienced by the station in the past. The collision avoidance protocol procedures specify that before transmitting, each station uniformly selects a random value for its backoff counter in the interval $[0, W_i-1]$ where $W_i$ is the current contention window (CW) size and $i$ is the number of failed transmissions of this packet. The value of $W_i$ may be equal to $W_i=2^i CW$, $i \in [0,m]$ where $m=\log_2(CW_{max}/CW_{min})$ identifies the number of backoff stages. At the first transmission attempt of a packet, $W_0= CW_{min}=CW$. If a packet encounters a collision, $W_i$ is doubled up to a maximum value, $W_m=CW_{max}=2^m CW$. Once $W_i$ reaches $CW_{max}$, it will remain at this value until it is reset to $CW_{min}$ after a successful packet transmission.

In the following, systems, devices and methods for updating a backoff parameter are described. A backoff parameter may be, for example, a size of a contention window (CW) used in a CSMA/CA access protocol as described above. While the initial backoff parameter may be unfavorably chosen, e.g. such that throughput and efficiency of the backoff algorithm are low, an update of the backoff algorithm may be based on the data frames transmit success/fail history. The success / fail of the past transmissions may be used to calculate a new backoff parameter, e.g. a new $ECW_{min}$ value, i.e. to update (at AP or stations by using beacon EDCA parameters) the original or initial backoff parameter to a more favorable value.

According to a first aspect, the invention relates to a device for updating an initial backoff parameter, the device comprising: a monitoring stage, configured to monitor, during a monitoring interval, a plurality of data transmissions of a plurality of WLAN devices; an identification stage, configured to identify a number of successful data transmissions from the plurality of data transmissions; a derivation stage, configured to derive a weighting function based on successful data transmissions; a weighting stage, configured to weight the initial backoff parameter of the monitoring interval with the weighting function to provide a weighted backoff parameter; and an updating stage, configured to update the initial backoff parameter for a next monitoring interval based on the weighted backoff parameter. The different stages can also be, at least in part, realized in a single structure.

Such a device provides the advantage that updating the initial backoff parameter based on the weighted backoff parameter results in a favourable backoff parameter for a CSMA/CA device as the update of the initial backoff parameter is based on the data frames transmit success / fail history. The success / fail of the past transmissions are used to calculate new favorable $ECW_{min}$ value.

In a first possible implementation form of the device according to the first aspect, the identification stage is configured to identify a particular data transmission of the plurality of data transmissions as a successful transmission for which particular transmission an acknowledgement has been received.

This provides the advantage, that information about successful transmissions may be exploited to determine a favorable backoff parameter.

In a second possible implementation form of the device according to the first aspect as such or according to the first implementation form of the first aspect, the identification stage is configured to identify for each successful data transmission a respective initial backoff parameter.

This provides the advantage, that the device may exploit information on each successful transmission to update the backoff parameter.

In a third possible implementation form of the device according to the second implementation form of the first aspect, the weighting stage is configured to average the initial backoff parameters identified for each successful data transmission to provide the weighted backoff parameter.

This provides the advantage that the device is able to exploit the backoff parameter history and therefore delivers more accurate results.

In a fourth possible implementation form of the device according to the third implementation form of the first aspect, the updating stage is configured to apply a nonlinear function $f(x)$, in particular a threshold function, to the weighted backoff parameter in order to provide the updated backoff parameter for the next monitoring interval.

This provides the advantage that controlling the backoff parameter and thereby finding the optimal backoff parameter can be realized.

In a fifth possible implementation form of the device according to the fourth implementation form of the first aspect, the nonlinear function $f(x)$ is according to the following:

$$f(x) = \begin{cases} ECW_{i-1} - 1 & \mmiddle| ECW_{AVR} < \alpha + ECW_{i-1} \\ ECW_{i-1} & \middle| \alpha + ECW_{i-1} \le ECW_{AVR} < \beta + ECW_{i-1} \\ ECW_{i-1} + 1 & \middle| \beta + ECW_{i-1} \le ECW_{AVR} \end{cases}$$

where $ECW_{i-1}$ is the previous initial backoff parameter of the monitoring interval, $ECW_{AVR}$ is the weighted backoff

parameter, $\alpha$ is a first threshold and $\beta$ is a second threshold with $\alpha < \beta < 1$. $\alpha$ and $\beta$ thresholds value is optimized according to deployment type and density for example, High Density (HD) like office building WLAN deployments or Very High Density (VHD) like lecture halls or stadiums deployments.

This nonlinear function f(x) can be easily implemented, in particular by threshold detection with only two thresholds.

In a sixth possible implementation form of the device according to the first aspect as such or according to any of the preceding implementation forms of the first aspect, the updating stage is configured: to apply a first threshold and a second threshold to the initial backoff parameter of the monitoring interval to divide the weighted backoff parameter of the monitoring interval into a first zone, a second zone and a third zone; and to update the initial backoff parameter for the next monitoring interval based on the respective zone in which the weighted backoff parameter resides.

This provides the advantage that a control of the backoff parameter to an optimal value can be implemented.

In a seventh possible implementation form of the device according to the sixth implementation form of the first aspect, the updating stage is configured: to increase the initial backoff parameter if the weighted backoff parameter resides in the first zone; to use the weighted backoff parameter as the initial backoff parameter for the next monitoring interval if the weighted backoff parameter resides in the second zone; and to decrease the initial backoff parameter if the weighted backoff parameter resides in the third zone.

This provides the advantage that the second zone used as a zone in which the optimal backoff parameter resides. A control loop driving the backoff parameter towards the second zone can be used to realize an optimal value for the backoff parameter.

In an eighth possible implementation form of the device according to the first aspect as such or according to the first implementation form of the first aspect, the monitoring stage is configured to monitor, during the monitoring interval, a plurality of retransmission flags.

This provides the advantage, that monitoring of the retransmission flags can be easily implemented requiring only a less additional complexity.

In a ninth possible implementation form of the device according to the eighth implementation form of the first aspect, the weighting stage is configured to average the plurality of retransmission flags to provide a retransmission percentage value.

This provides the advantage that using averaged retransmission flags increases the accuracy of the device.

In a tenth possible implementation form of the device according to the ninth implementation form of the first aspect, the updating stage is configured to apply a nonlinear function g(x), in particular a threshold function, to the retransmission percentage value in order to provide the updated backoff parameter for the next monitoring interval.

This provides the advantage that controlling the backoff parameter and thereby finding the optimal backoff parameter can be either realized by the nonlinear function f(x) with respect to the weighted backoff parameter or by the nonlinear function g(x) with respect to the retransmission percentage value.

In an eleventh possible implementation form of the device according to the tenth implementation form of the first aspect, the nonlinear function g(x) is according to the following:

$$g(x) = \begin{cases} \mathrm{ECW}_{i-1} - 1 & \left| \mathrm{ReTx}_{[\%]} < \lambda \right. \\ \mathrm{ECW}_{i-1} & \left| \lambda \le \mathrm{ReTx}_{[\%]} < \delta \right. \\ \mathrm{ECW}_{i-1} + 1 & \left| \mathrm{ReTx}_{[\%]} \ge \delta \right. \end{cases}$$

where $\mathrm{ECW}_{i-1}$ is the previous initial backoff parameter, ReTx is the retransmission percentage value, $\lambda$ is a first threshold and $\delta$ is a second threshold with $\lambda < \delta < 1$. $\lambda$ and $\delta$ thresholds value is optimized according to deployment type and density for example, High Density (HD) like office building WLAN deployments or Very High Density (VHD) like lecture halls or stadiums deployments.

This nonlinear function g(x) can be easily implemented, in particular by threshold detection with only two thresholds.

In a twelfth possible implementation form of the device according to the first aspect as such or according to the first implementation form of the first aspect, the updating stage is configured to update the initial backoff parameter for the next monitoring interval per access category and per transmission direction.

This provides the advantage that a more accurate value of the backoff parameter can be provided when considering the access category and the transmission direction.

In a thirteenth possible implementation form of the device according to the first aspect as such or according to the first implementation form of the first aspect, the updating stage is configured to update the initial backoff parameter for the next monitoring interval per service class, in particular different for the following service classes: voice, video, best effort and background.

This provides the advantage that a more accurate value for the updated backoff parameter can be provided when considering the service class.

According to a second aspect, the invention relates to a method for updating an initial backoff parameter, the method comprising: monitoring, during a monitoring interval, a plurality of data transmissions of a plurality of WLAN devices; identifying a number of successful data transmissions from the plurality of data transmissions; deriving a weighting function based on successful data transmissions; weighting the initial backoff parameter of the monitoring interval with the weighting function to provide a weighted backoff parameter; and updating the initial backoff parameter for a next monitoring interval based on the weighted backoff parameter.

Such a method provides the advantage that updating the initial backoff parameter based on the weighted backoff parameter results in a favourable backoff parameter for a CSMA/CA device as the update of the backoff parameter is based on the data frames transmit success/fail history. The success / fail of the past transmissions are used to calculate a new favourable $ECW_{min}$ value.

## BRIEF DESCRIPTION OF THE DRAWINGS

Further embodiments of the invention will be described with respect to the following figures, in which:

Fig. 1a/b show performance diagrams 100a, 100b illustrating throughput and efficiency versus backoff parameter $ECW_{min}$ when applying a conventional backoff algorithm in a CSMA-CA process;

Fig. 2 shows a block diagram of a device 200 for updating a backoff parameter according to an implementation form;

Fig. 3 shows a schematic diagram of a method 300 for updating a backoff parameter according to an implementation form;

Fig. 4 shows a schematic diagram illustrating an exemplary scheme 400 for downlink $ECW_{min}$ calculation according to an implementation form;

Fig. 5 shows a schematic diagram illustrating an exemplary scheme 500 for uplink $ECW_{min}$ calculation according to an implementation form;

Fig. 6 shows a diagram illustrating a decision area 600 for a backoff parameter according to a first configuration;

Fig. 7a/b show performance diagrams 700a, 700b illustrating throughput and efficiency versus backoff parameter $ECW_{min}$ when applying an updated backoff algorithm in a CSMA-CA process according to an implementation form;

Fig. 8 shows a performance diagram 800 illustrating fixed versus dynamic $ECW_{min}$ performance; and

Fig. 9 shows a performance diagram 900 illustrating collision and data rate versus ECWmin.

## DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

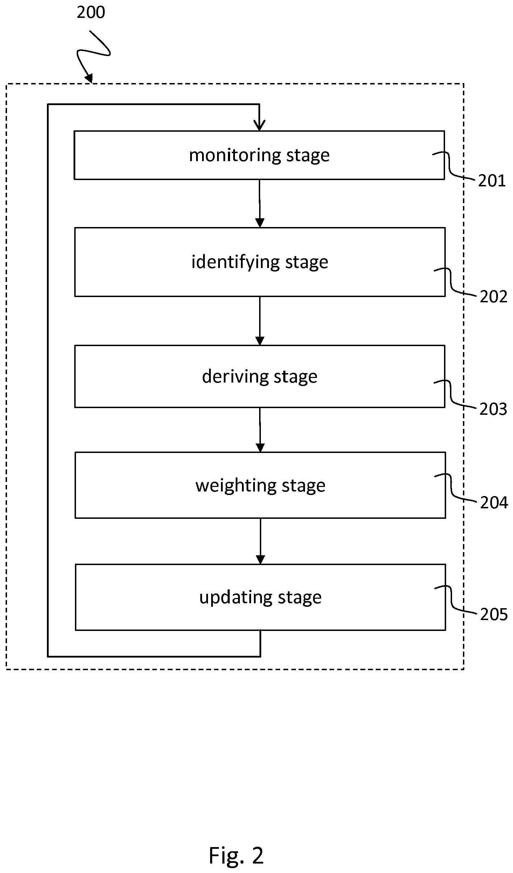

Fig. 2 shows a block diagram of a device 200 for updating a backoff parameter according to an implementation form. The device 200 includes a monitoring stage 201, an identification stage 202, a derivation stage 203, a weighting stage 204 and an updating stage 205. These different stages may be implemented for example as hardware or software devices.

The monitoring stage 201 is configured to monitor, during a monitoring interval, a plurality of data transmissions of a plurality of WLAN devices. The identification stage 202 is configured to identify a number of successful data transmissions from the plurality of data transmissions. The derivation stage 203 is configured to derive a weighting function based on successful data transmissions. The weighting stage 204 is configured to weight a backoff parameter $ECW_{min}$ of the monitoring interval with the weighting function to provide a weighted backoff parameter $ECW_{AVR}$. The updating stage 205 is configured to update the backoff parameter $ECW_{min}$ for a next monitoring interval based on the weighted backoff parameter $ECW_{AVR}$.

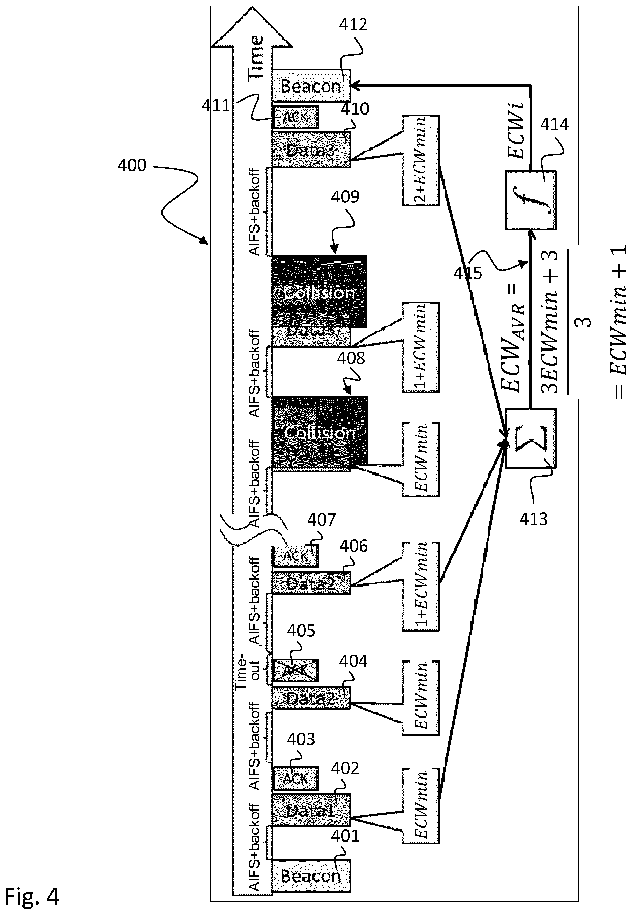

The identification stage 202 may identify a particular data transmission (per AC when working with QoS) of the plurality of data transmissions as a successful transmission for which particular transmission an acknowledgement has been received, e.g. an acknowledgement 403, 407, 411 as described below with respect to Fig. 4.

The identification stage 202 may identify for each successful data transmission, e.g. a successful data transmission 402, 406, 410 as described below with respect to Fig. 4, a respective backoff parameter $ECW_{min}$.

The weighting stage 204 may average, e.g. by an average unit 413 as described below with respect to Fig. 4, the backoff parameters $ECW_{min}$ identified for each successful data transmission to provide the weighted backoff parameter $ECW_{AVR}$.

The updating stage 205 may apply a nonlinear function f(x), e.g. as described below with respect to Fig. 4, in particular a threshold function, to the weighted backoff parameter $ECW_{AVR}$ in order to provide the updated backoff parameter $ECW_i$ for the next monitoring interval.

The nonlinear function f(x) may be according to the following:

$$f(x) = \begin{cases} ECW_{i-1} - 1 & |ECW_{AVR} < \alpha + ECW_{i-1} \\ ECW_{i-1} & |\alpha + ECW_{i-1} \le ECW_{AVR} < \beta + ECW_{i-1} \\ ECW_{i-1} + 1 & |\beta + ECW_{i-1} \le ECW_{AVR} \end{cases}$$

$ECW_{i-1}$ is the previous backoff parameter of the monitoring interval, $ECW_{AVR}$ is the weighted backoff parameter, $\alpha$ is a first threshold and $\beta$ is a second threshold with $\alpha < \beta < 1$.

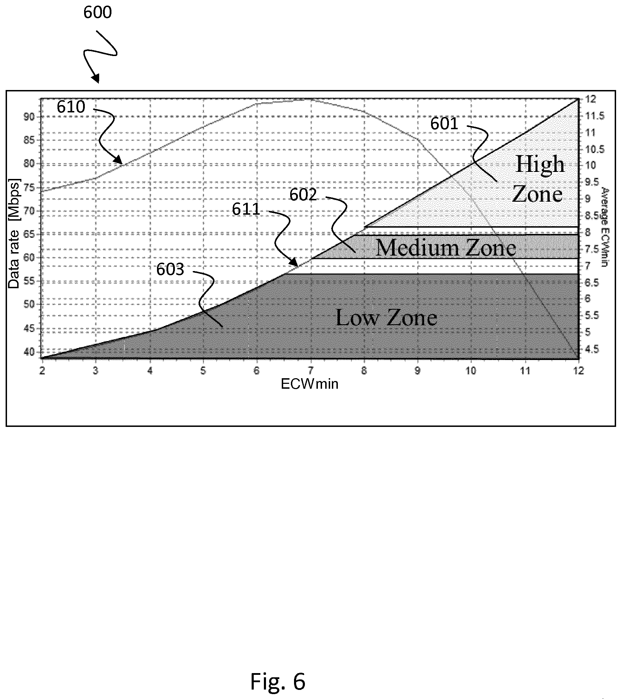

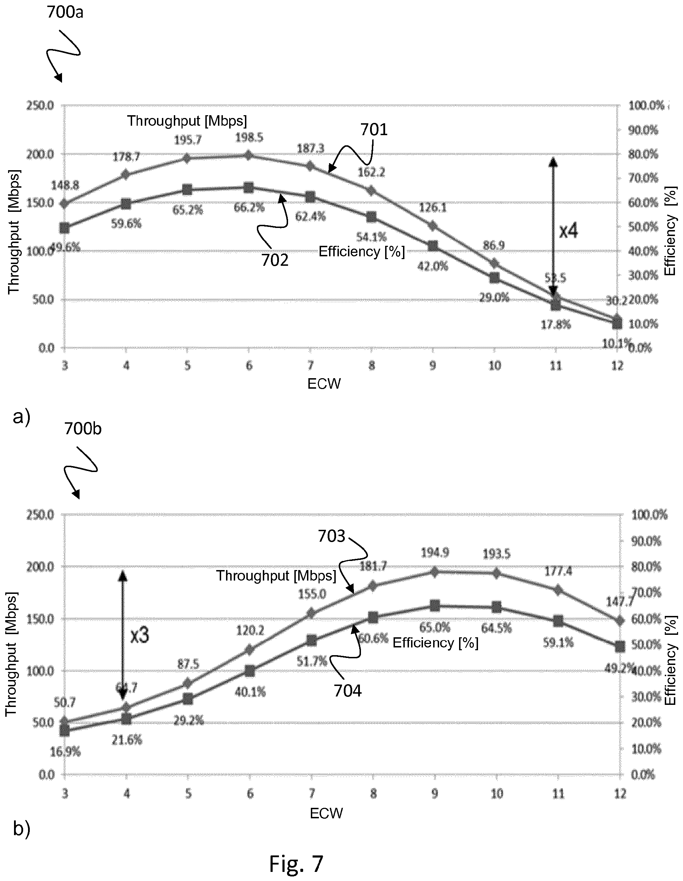

The updating stage 205 may be configured to apply a first threshold and a second threshold to the backoff parameter $ECW_{min}$ of the monitoring interval to divide the weighted backoff parameter $ECW_{AVR}$ of the monitoring interval into a first zone, a second zone and a third zone, e.g. a first zone 603, 703, a second zone 602, 702 and a third zone 601, 701 as described below with respect to Figures 6 and 7. The updating stage 205 may be configured to update the backoff parameter $ECW_{min}$ for the next monitoring interval based on the respective zone in which the weighted backoff parameter $ECW_{AVR}$ resides.

The updating stage 205 may be configured to increase the backoff parameter $ECW_{min}$ if the weighted backoff parameter $ECW_{AVR}$ resides in the first zone 603, 703. The updating stage 205 may be configured to use the weighted backoff parameter $ECW_{AVR}$ (without updating of $ECW_{min}$) as the backoff parameter $ECW_{min}$ for the next monitoring interval if the weighted backoff parameter $ECW_{AVR}$ resides in the second zone 602, 702. The updating stage 205 may be configured to decrease the backoff parameter $ECW_{min}$ if the weighted backoff parameter $ECW_{AVR}$ resides in the third zone 601, 701.

After the updating stage 205 the monitoring stage 201 for the next monitoring interval may be performed, e.g., until a specific accuracy for the updated backoff parameter $ECW_i$ is reached.

The monitoring stage 201 may be configured to monitor, during the monitoring interval, a plurality of retransmission flags Re-Tx.

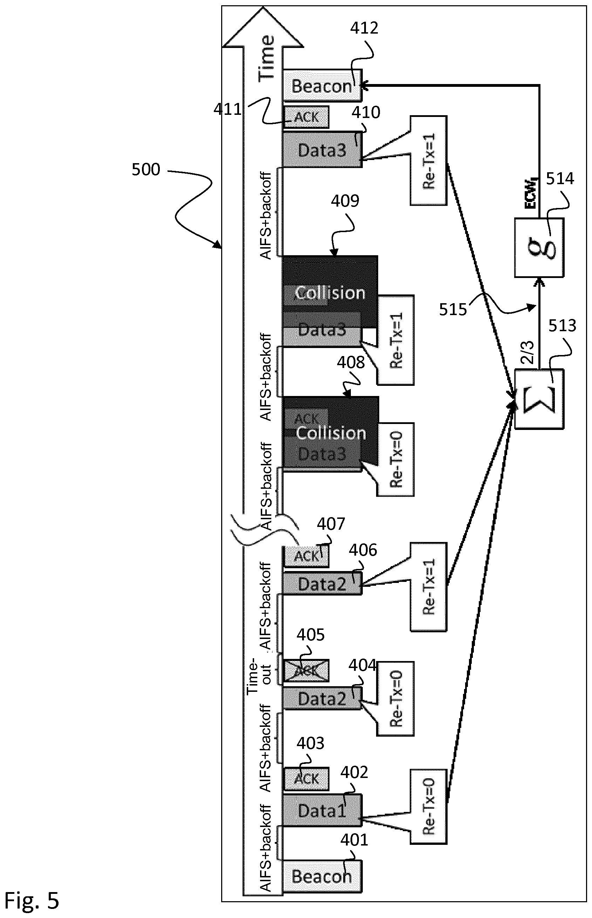

The weighting stage 204 may be configured to average, e.g. by an average unit 513 as described below with respect to Fig. 5 the plurality of retransmission flags Re-Tx to provide a retransmission percentage value, e.g. a retransmission percentage value 515 as described below with respect to Fig. 5.

The updating stage 205 may be configured to apply a nonlinear function g(x), e.g. a nonlinear function g(x) 514 as described below with respect to Fig. 5, in particular a threshold function, to the retransmission percentage value 515 in order to provide the updated backoff parameter $ECW_i$ for the next monitoring interval.

The nonlinear function g(x) may be is according to the following function 514 as described below with respect to Fig. 5:

$$g(x) = \begin{cases} \mathrm{ECW}_{i-1} - 1 & \left| ReTx_{[\%]} < \lambda \right. \\ \mathrm{ECW}_{i-1} & \left| \lambda \le ReTx_{[\%]} < \delta \right. \\ \mathrm{ECW}_{i-1} + 1 & \left| ReTx_{[\%]} \ge \delta \right. \end{cases}$$

$\mathrm{ECW}_{i-1}$ is the previous backoff parameter, ReTx is the retransmission percentage value, $\lambda$ is a first threshold and $\delta$ is a second threshold with $\lambda < \delta < 1$.

The updating stage 205 may be configured to update the backoff parameter $\mathrm{ECW}_{min}$ for the next monitoring interval per access category and per transmission direction.

The updating stage 205 may be configured to update the backoff parameter $\mathrm{ECW}_{min}$ for the next monitoring interval per service class, in particular different for the following service classes: voice, video, best effort and background.

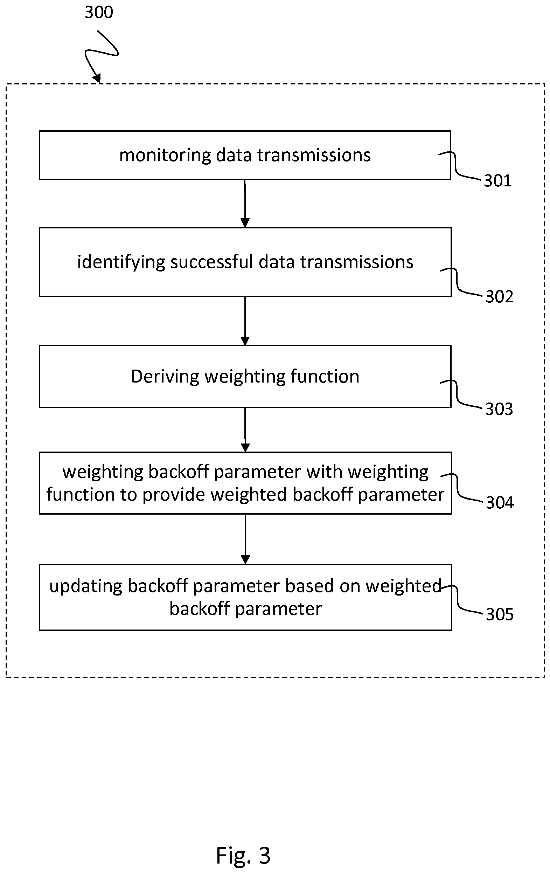

Fig. 3 shows a schematic diagram of a method 300 for updating a backoff parameter according to an implementation form.

The method 300 includes monitoring 301, during a monitoring interval, a plurality of data transmissions of a plurality of WLAN devices. The monitoring 301 may correspond to the monitoring of the monitoring stage 201 described above with respect to Fig. 2.

The method 300 includes identifying 302 a number of successful data transmissions from the plurality of data transmissions. The identifying 302 may correspond to the identifying of the identification stage 202 described above with respect to Fig. 2.

The method 300 includes deriving 303 a weighting function based on successful data transmissions. The deriving 303 may correspond to the deriving of the derivation stage 203 described above with respect to Fig. 2.

The method 300 includes weighting 304 a backoff parameter $\mathrm{ECW}_{min}$ of the monitoring interval with the weighting function to provide a weighted backoff parameter $\mathrm{ECW}_{AVR}$. The weighting 304 may correspond to the weighting of the weighting stage 204 described above with respect to Fig. 2.

The method 300 includes updating 305 the backoff parameter $\mathrm{ECW}_{min}$ for a next monitoring interval based on the weighted backoff parameter ($\mathrm{ECW}_{AVR}$). The updating 305 may correspond to the updating of the updating stage 205 described above with respect to Fig. 2.

Fig. 4 shows a schematic diagram illustrating an exemplary scheme 400 for downlink $\mathrm{ECW}_{min}$ calculation according to an implementation form.

During a monitoring interval between two beacons 401, 412 a plurality of data transmissions (TX and RX) occur. A first data transmission Data1 402 is acknowledged by a first Acknowledgement 403. For a second data transmission Data2 404 an acknowledgement 405 fails. A retransmission of the second data transmission Data2 406 is acknowledged by a second Acknowledgement 407. For a third data transmission Data3 a collision 408 occurs. For a retransmission of the third data transmission Data3 a second collision 409 occurs. A further retransmission of the third data transmission Data3, 410 is acknowledged by a third Acknowledgement 411. Backoff parameters of successful transmissions 402, 406, 410 are averaged by an averaging unit 413 to provide a weighted (or averaged) backoff parameter $\mathrm{ECW}_{AVR}$ 415. A non-linear function f(x) 414, e.g. a threshold function, is applied to the weighted (or averaged) backoff parameter $\mathrm{ECW}_{AVR}$ 415 to provide an update of the backoff parameter $\mathrm{ECW}_i$ for the next monitoring interval.

The scheme 400 realizes a novel dynamic backoff parameter (ECWmin) calculation based on the data frames transmit success/fail history. The success / fail of the past transmissions are used to calculate a new $\mathrm{ECW}_{min}$ value.

During a beacon interval the ECW for success or fail of downlink transmission data frames (type = 2) may be accumulated and the average ECW ($\mathrm{ECW}_{AVR}$) may be calculated, e.g. by using the following equation:

$$\mathrm{ECW}_{AVR} = \frac{1}{\mathrm{NoOfFrames}} \sum_{i=0}^{\mathrm{NoOfFrames}} \mathrm{ECW}_i$$

The ECW may be calculated for downlink data frames per Access Category (AC). At the end of a beacon interval, e.g. at 412, new ECW values may be calculated according to:

$$\mathrm{ECW}_{\substack{min}}^{AC_i} = f\left(\mathrm{ECW}_{\substack{AVR}}^{AC_i}\right)$$

At the next beacon interval ECW parameters may be advertised in WMM fields (client parameters) and downlink ECW parameters may be adopted. A different WMM parameter set (AIFS, $\mathrm{ECW}_{min}$, et.) may be used per AC. In one example, the non-linear function f(x) may be designed as follows:

$$f(x) = \begin{cases} ECW_{i-1} - 1 & \left| ECW_{AVR} < \alpha + ECW_{i-1} \right. \\ ECW_{i-1} & \left| \alpha + ECW_{i-1} \le ECW_{AVR} < \beta + ECW_{i-1} \right. \\ ECW_{i-1} + 1 & \left| \beta + ECW_{i-1} \le ECW_{AVR} \right. \end{cases}$$

with $0 < \alpha < \beta < 1$.

Fig. 5 shows a schematic diagram illustrating an exemplary scheme 500 for uplink $ECW_{min}$ calculation according to an implementation form.

During a monitoring interval between two beacons 401, 412 a plurality of data transmissions (TX and RX) occur, e.g. according to the description above with respect to Fig. 4. A first data transmission Data1 402 is acknowledged by a first Acknowledgement 403. For a second data transmission Data2 404 an acknowledgement 405 fails. A retransmission of the second data transmission Data2 406 is acknowledged by a second Acknowledgement 407. For a third data transmission Data3 a collision 408 occurs. For a retransmission of the third data transmission Data3 a second collision 409 occurs. A further retransmission of the third data transmission Data3, 410 is acknowledged by a third Acknowledgement 411. Retransmission flags Re-Tx of successful transmissions 402, 406, 410 are averaged by an averaging unit 513 to provide a retransmission percentage value 515. A non-linear function g(x) 514, e.g. a threshold function, is applied to the retransmission percentage value 515 to provide an update of the backoff parameter $ECW_i$ for the next monitoring interval.

The scheme 500 realizes a novel dynamic backoff parameter ($ECW_{min}$) calculation based on the data frames transmit success/fail history. The success / fail of the past transmissions (using a retransmission flag ReTx) are used to calculate a new $ECW_{min}$ value.

During a beacon interval the number of uplink frames and frames with Rx-Tx bit set may be accumulated for determining success or fail of uplink transmission data frames and the Re-Tx ECW ($ECW_{ReTx}$) may be calculated, e.g. by using the following equation:

$$Re\,Tx_{[\%]} = \frac{1}{NoOfFrames} \sum_{i=0}^{NoOfFrames} \left( ReTxFlag_i == 1 \right)$$

The ECW may be calculated for uplink data frames per Access Category (AC). At the end of a beacon interval, e.g. at 412, new ECW values may be calculated according to:

$$ECW_{min}^{AC_i} = g\left( ReTx_{[\%]}^{AC_i} \right)$$

At the next beacon interval ECW parameters may be advertised in WMM fields (client parameters) and downlink ECW parameters may be adopted. A different WMM parameter set (AIFS, $ECW_{min}$, et.) may be used per AC. In one example, the non-linear function g(x) may be designed as follows:

$$g(x) = \begin{cases} ECW_{i-1} - 1 & \left| Re\,Tx_{[\%]} < \lambda \right. \\ ECW_{i-1} & \left| \lambda \le Re\,Tx_{[\%]} < \delta \right. \\ ECW_{i-1} + 1 & \left| Re\,Tx_{[\%]} \ge \delta \right. \end{cases}$$

with $0 < \lambda < \delta < 1$.

When working with EDCA QoS, a different WMM parameter set (AIFS, $ECW_{min}$, etc.) may be used per AC. Using f(x) and/or g(x) per AC might conflict due to QoS requirements, i.e., priority between different AC and DL / UL priority. To solve those conflicts, an $ECW_{min}(AC)$ value may be selected per AC and per direction when each value depends also on higher priority values. In one exemplary implementation $ECW_{min}$ values may be selected per AC according to pre-configured priorities and the following equations (per direction):

Downlink, access category voice (VO indicates Voice AC):

$$ECW_{min}^{VO} = f\left(ECW_{AVR}^{VO}\right)$$

Downlink, access category video (VI indicates Video AC):

$$ECW_{min}^{VI} = MAX\left(f\left(ECW_{AVR}^{VI}\right), K_{VI} \cdot ECW_{min}^{VO}\right)$$

Downlink, access category best effort (BE indicates Best Effort AC):

$$ECW_{min}^{BE} = MAX\left(f\left(ECW_{AVR}^{BE}\right), K_{BE} \cdot ECW_{min}^{VO}\right)$$

Downlink, access category background (BK indicates Background AC):

$$ECW_{min}^{BK} = MAX\left(f\left(ECW_{AVR}^{BK}\right), K_{BK} \cdot ECW_{min}^{VO}\right)$$

Uplink, access category voice (VO indicates Voice AC):

$$ECW_{min}^{VO} = L'_{VO} \cdot ECW_{DL}^{VO}$$

Uplink, access category video (VI indicates Video AC):

$$ECW_{min}^{VI} = MAX\left(L_{VI} \cdot ECW_{min}^{VO}, L'_{VI} \cdot ECW_{DL}^{VO}\right)$$

Uplink, access category best effort (BE indicates Best Effort AC):

$$ECW_{min}^{BE} = MAX\left(L_{BE} \cdot ECW_{min}^{VO}, L'_{BE} \cdot ECW_{DL}^{VO}\right)$$

Uplink, access category background (BK indicates Background AC):

$$ECW_{min}^{BK} = MAX\left(L_{BK} \cdot ECW_{min}^{VO}, L'_{BK} \cdot ECW_{DL}^{VO}\right)$$

In a first example $K_{ac}$ defines the priority ratio between each DL Access Category and highest priority (voice) and $K_{VI}$ defines the priority ratio between video and voice. In a second example $L_{ac}$ defines the priority ratio between each UL Access Category and highest priority (voice) and $L_{VI}$ defines the priority ratio between video and voice. In a third example $L'_{ac}$ defines the priority ratio between DL and UL and $L'_{VO}$ defines the priority ratio between DL voice and UL voice.

Fig. 6 shows a diagram illustrating a decision area 600 for a backoff parameter according to a first configuration. A first curve 610 illustrates the data rate versus backoff parameter $ECW_{min}$ for a configuration of eight terminals within a WLAN. The second curve 611 illustrates an average backoff parameter $ECW_{AVG}$, e.g. as determined by a device 200 or a method 300 as described above with respect to Figures 2 and 3. The decision area 600 includes a low zone 603, a medium zone 602 and a high zone 601.

A first threshold, e.g. in the range of $ECW_{AVR} \in [0, 7]$ and a second threshold, e.g. in the range of $ECW_{AVR} \in [7, 8]$ is applied to the weighted backoff parameter $ECW_{AVR}$ to divide the decision area 600 into a first zone 603 (Low Zone), a second zone 602 (Medium Zone) and a third zone 601 (High Zone). The backoff parameter $ECW_{min}$ for the next monitoring interval may be updated based on the respective zone in which the weighted backoff parameter $ECW_{AVR}$ resides.

The core idea is to estimate the $ECW_{min}$ value from the past average ECW of success TX and use it in the next beacon interval. Average ECW cannot be less than the $ECW_{min}$ so 2 thresholds may be selected that divides the average ECW to low, medium and high values. When the average ECW is similar to $ECW_{min}$ the next $ECW_{min}$ should be less than the current $ECW_{min}$. When the average ECW has a medium value the next $ECW_{min}$ should be the current $ECW_{min}$. When the average ECW has a high value the next $ECW_{min}$ should be more than the current $ECW_{min}$.

Fig. 7a/b show performance diagrams 700a, 700b illustrating throughput and efficiency versus backoff parameter $ECW_{min}$ when applying a backoff algorithm using an updated backoff parameter in a CSMA-CA process according to an implementation form. Curve 1 701 and curve 3 703 illustrate superior throughput of a backoff algorithm using an updated backoff parameter according to the disclosure compared to a conventional backoff algorithm as depicted in Fig. 1a/b. Curve 2 702 and curve 4 704 illustrate superior efficiency of a backoff algorithm using an updated backoff parameter according to the disclosure compared to a conventional backoff algorithm as depicted in Fig. 1a/b.

Adjusting the CW parameters to the number of active devices improves the WLAN efficiency and increase the WLAN capability. In a controlled BSS network the benefits are as follows: up to 300% increase in data efficiency (PHY data rate/ MAC data rate), up to 4 times the number of clients associated to AP and up to 100% in client maximal throughput. In a controlled OBSS network, the benefits are: up to 100% increase in data efficiency, up to 6 times the number of clients and up to 300% in client maximal throughput. In a mixed network the benefits are prioritizing controlled network over standalone Aps, reducing the foreign interference on the controlled network, up to 500% increase of the controlled network performance and prevention of saturation of the controlled network.

From Fig. 7a/b it can be seen that devices and methods according to the disclosure optimize the value $ECW_{min}$ and achieve higher efficiency and priority over IBSS, BSS and OBSS APs.

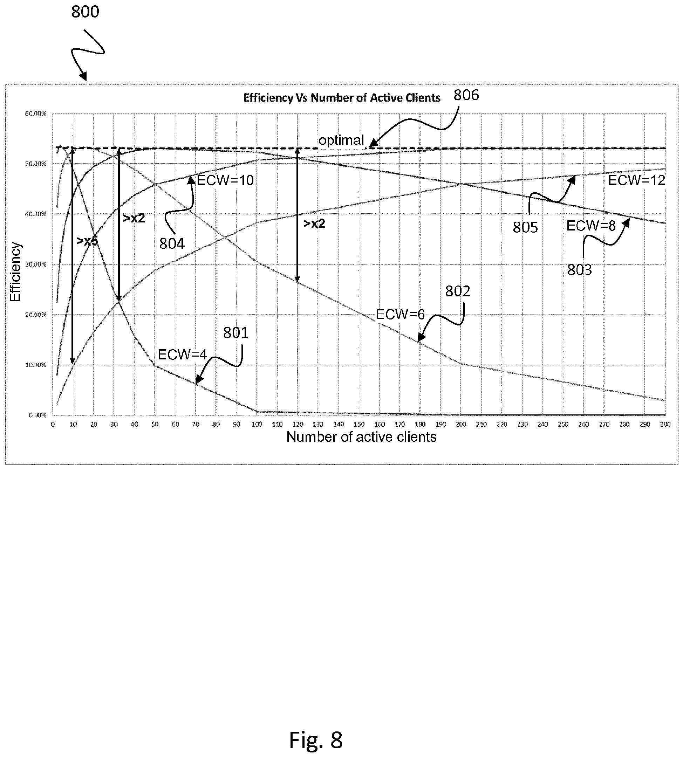

Fig. 8 shows a performance diagram 8900 illustrating fixed versus dynamic $ECW_{min}$ performance.

A first curve 801 depicts efficiency in % versus number of active clients for ECW=4. A second curve 802 depicts efficiency in % versus number of active clients for ECW=6. A third curve 803 depicts efficiency in % versus number of active clients for ECW=8. A fourth curve 804 depicts efficiency in % versus number of active clients for ECW=10. A fifth curve 805 depicts efficiency in % versus number of active clients for ECW=12. A sixth curve 806 depicts the optimal efficiency. When using a device 200 or a method 300 as described above with respect to Figure 2 and 3 an improvement of factor 2 to factor 5 can be achieved over a conventional approach.

The present disclosure also supports a computer program product including computer executable code or computer executable instructions that, when executed, causes at least one computer to execute the performing and computing steps described herein, in particular the method 300 described above with respect to Fig. 3. Such a computer program product may include a readable storage medium storing program code thereon for use by a computer. The program code may perform the method 300 as described above with respect to Fig. 3.

EXAMPLES

In the following section, the mathematical theory for deriving an updated backoff parameter according to the disclosure and some examples are presented.

In this disclosure the term Efficiency refers to:

$$\text{Efficiency} = \frac{\text{SDU Tx Time}}{\text{MSDU Tx Time}} = \frac{\dfrac{\text{UserDataSize}_{Bits}}{\text{PHY Rate}}}{\sum_{i=1}^{Re-Tx}\left(\text{PHY}_{OH} + MAC_{OH_i} + \dfrac{\text{FrameSize} + \text{MAC}_{Header}}{\text{PHY Rate}} + Ack_{Time}\right)}$$

The PHY overheads transmit time ($PHY_{OH}$) depends on 802.11 TG (11a, 11b, 11g, 11n, etc.) and number of TX and RX antennas [sec].

The MAC overheads transmit time ($MAC_{OH}$) includes DIFS and BEB time that depends on number of Retransmissions (Re-Tx) [sec].

The DIFS time depends on 802.11 TG (11a, 11b, 11g, 11n, etc.) and QoS AC (AIFS).

The average backoff time is for a single transmit (no Re-Tx) according to:

$$\frac{CW_i \cdot Slot_{time}}{2 \cdot \text{NumberOfDevices}}$$

The $MAC_{Header}$ size depends on 802.11 TG (11a, 11b, 11g, 11n, etc.) and working modes (adds new fields to original MAC header), the $MAC_{Header}$ transmitted with the data PHY rate [bits] (30 bytes in 11a, 11b, 11g and 36 bytes in 11n and 11ac).

After each MPDU the receiver send ACK frame, (exclude delay block ACK mode). The $ACK_{Time}$ depends on SIFS and ACK frame size [sec].

A SIFS gap between data frame and ACK frame depends on 802.11 TG (11a, 11b, 11g, 11n, etc).

The 802.11 ACK frame transmit time is according to:

$$PHY\ headers + \frac{MAC\ ACK\ frame\ size}{Minimal\ PHYRate}$$

The following expressions are defined for convenience:

Data (net):

$$T_{data} = \frac{Data_{bytes} \cdot 8}{PHY_{Rate}}$$

802.11 frame (gross):

$$T_d = PHY_{plcp} + T_{data} + \frac{MAC_{bytes} \cdot 8}{PHY_{Rate}} + SIFS + ACK_{TxTime} + AIFS$$

In BEB after failed transmit process (i.e., no ACK received), the value of CW is duplicated by 2. So in MPtMP (multi-point to multy-point) deployment when collision probability > 0 the number or Re-Tx is calculated by the following probabilities:

Backoff selection probability (ECWmin=ECWmax):

$$p = \frac{2}{2^{ECW}}$$

Probability of Idle in a slot (N=number of active devices):

$$P_I = (1 - p)^N$$

Probability of successful Tx in a slot:

$$P_S = N \cdot p \cdot (1 - p)^{N-1}$$

Probability of collision in a slot:

$$P_C = 1 - P_I - P_S = 1 - (1 - p)^N - N \cdot p \cdot (1 - p)^{N-1}$$

So in MPtMP environment the efficiency is as follows:

$$Efficiency = \eta = \frac{Ps \cdot T_{Data}}{P_I \cdot Slot + T_d \cdot (P_S + P_C)}$$

The following examples show the impact of BEB on the 802.11 efficiency:

Example 1:

Calculating TCP data rate, in 802.11ac (40GHz, 2x2, 5GHz) WLAN network ($CW_{min}$=64, $CW_{max}$=1024):

- Back time (6 active devices): (64*9)/(2*6)+43=91$\mu$sec

- Transmit time of TCP data packet of 1460: (1460+40)*8/300+44=84$\mu$sec
- SiFS: 16$\mu$sec
- ACK time (normal ACK): 44+(40*8)/26=60$\mu$sec

Total TCP data rate is:

- Transmit frame time: 91+84+16+60=251$\mu$sec
- Assuming we have 10% collision probability and 5% PER the Transmit time is:

  ○ First TX: 251*0.855=214.65$\mu$sec
  ○ Second TX: (91 + 139 + 2*(84 + 16 + *60))*0.145=79.75$\mu$sec
  ○ Third TX: (91 + 139 + 235 + 3*(84 + 16 + 60))*0.145$^2$ = 19.87$\mu$sec
  ○ Forth TX: (91 + 139 + 235 + 427 + 4*(84 + 16 + 60))*0.145$^3$ = 4.67$\mu$sec
  ○ Etc.

Average TX time is: 214.025+79.75+20+4.67+...=~320$\mu$sec

- Transmit TCP window of 64240 bytes time: 44*320=14.1ms
- TCP data rate: 1000/14.1*64240*8=~36.5Mbps

The backoff overhead was ~39%

Example 2:

Calculating TCP data rate, in 802.11ac (40GHz, 2x2, 5GHz) WLAN network ($CW_{min}$=64, $CW_{max}$=1024):

- $ECW_{min}$=4, $ECW_{max}$=4
- 6 active devices
- Transmit time of UDP data packet of 1460: $T_{data}$=(1460+40)*8/300=40$\mu$sec
- SIFS: 16$\mu$sec
- ACK time (normal ACK): 44+(40*8)/26=60$\mu$sec

Total UDP data rate is:

- Transmit frame time: $T_d$=91+40+16+60=251$\mu$sec
- P=2/16=0.125
- $P_I$=(1-0.125)$^6$=0.449
- $P_S$=N*P*(1-p)$^{(n-1)}$=6*0.125*0.513=0.385

The UDP efficiency is 7.1%

$$(Efficiency=Ps*T_{data}/(P_I*Slot+T_d*(P_S+P_I))=0.385*40/(0.449*16+251*(0.449+0.385))=7.1\%)$$

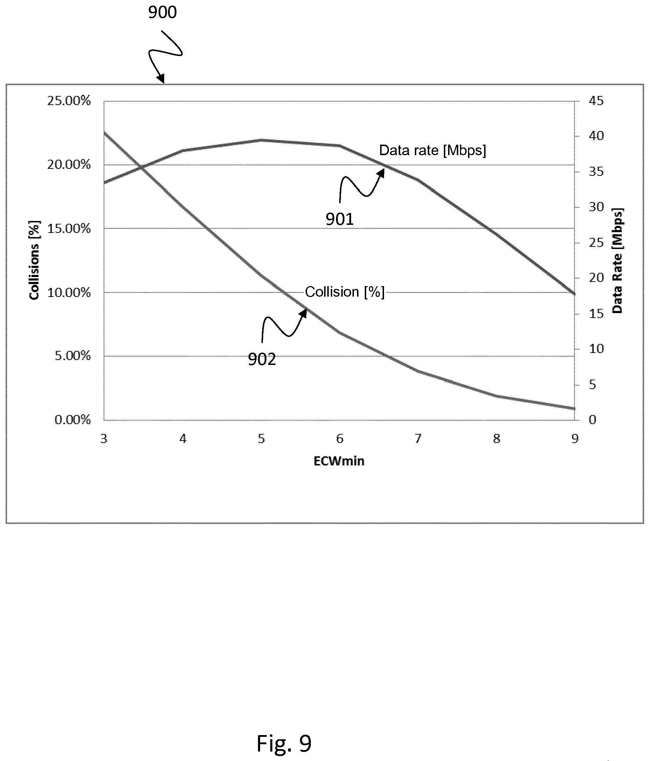

Figure 9 shows the probability and data rate for a real 11ac (5GHz) system with 6 devices. Curve 901 illustrates the data rate in Mbps and curve 902 illustrates the collision in percentage.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims, the invention may be practiced otherwise than as specifically described herein.

## Claims

1. A device (200) for updating an initial backoff parameter, $ECW_{min}$, the device comprising:

   a monitoring stage (201), configured to monitor, during a monitoring interval, a plurality of data transmissions of a plurality of WLAN devices;
   an identification stage (202), configured to identify a number of successful data transmissions from the plurality of data transmissions, wherein the identification stage (202) is configured to identify for each successful data transmission (402, 406, 410) a respective backoff parameter;
   a weighting stage (204), configured to weight the initial backoff parameter, $ECW_{min}$, of the monitoring interval with a weighting function to provide a weighted backoff parameter, $ECW_{AVR}$, wherein the weighting stage (204) is configured to average (413) the backoff parameters identified for each successful data transmission (402, 406, 410) to provide the weighted backoff parameter, $ECW_{AVR}$; and
   an updating stage (205), configured to update the initial backoff parameter, $ECW_{min}$, for a next monitoring interval based on the weighted backoff parameter, $ECW_{AVR}$.

2. The device (200) of claim 1,
   wherein the identification stage (202) is configured to identify a particular data transmission of the plurality of data transmissions as a successful transmission for which particular transmission an acknowledgement (403, 407, 411) has been received.

3. The device (200) of claim 1,
   wherein the updating stage (205) is configured to apply a nonlinear function, f(x), (414), in particular a threshold function, to the weighted backoff parameter, $ECW_{AVR}$, in order to provide the updated backoff parameter, $ECW_i$, for the next monitoring interval.

4. The device (200) of claim 3, wherein the nonlinear function, f(x), (414) is according to the following:

$$f(x) = \begin{cases} ECW_{i-1} - 1 & \left| ECW_{AVR} < \alpha + ECW_{i-1} \right. \\ ECW_{i-1} & \left| \alpha + ECW_{i-1} \leq ECW_{AVR} < \beta + ECW_{i-1} \right. \\ ECW_{i-1} + 1 & \left| \beta + ECW_{i-1} \leq ECW_{AVR} \right. \end{cases},$$

   where $ECW_{i-1}$ is the previous initial backoff parameter, $ECW_{min}$, of the monitoring interval, $ECW_{AVR}$ is the weighted backoff parameter, $ECW_{AVR}$, $\alpha$ is a first threshold and $\beta$ is a second threshold with $\alpha < \beta < 1$.

5. The device (200) of one of the preceding claims, wherein the updating stage (205) is configured:

   to apply a first threshold and a second threshold to the initial backoff parameter, $ECW_{min}$, of the monitoring interval to divide the weighted backoff parameter, $ECW_{AVR}$, of the monitoring interval into a first zone (603, 703), a second zone (602, 702) and a third zone (601, 701); and
   to update the initial backoff parameter, $ECW_{min}$, for the next monitoring interval based on the respective zone in which the weighted backoff parameter, $ECW_{AVR}$, resides.

**6.** The device (200) of claim 5, wherein the updating stage (205) is configured:

to increase the initial backoff parameter, $ECW_{min}$, if the weighted backoff parameter, $ECW_{AVR}$, resides in the first zone (603, 703);
to use the weighted backoff parameter, $ECW_{AVR}$, as the initial backoff parameter, $ECW_{min}$, for the next monitoring interval if the weighted backoff parameter, $ECW_{AVR}$, resides in the second zone (602, 702); and
to decrease the initial backoff parameter, $ECW_{min}$, if the weighted backoff parameter, $ECW_{AVR}$, resides in the third zone (601, 701).

**7.** The device (200) of claim 1 or 2,
wherein the monitoring stage (201) is configured to monitor, during the monitoring interval, a plurality of retransmission flags, Re-Tx.

**8.** The device (200) of claim 7,
wherein the weighting stage (204) is configured to average (513) the plurality of retransmission flags, Re-Tx, to provide a retransmission percentage value (515).

**9.** The device (200) of claim 8,
wherein the updating stage (205) is configured to apply a nonlinear function g(x) (514), in particular a threshold function, to the retransmission percentage value (515) in order to provide the updated backoff parameter, $ECW_i$, for the next monitoring interval.

**10.** The device (200) of claim 9, wherein the nonlinear function, g(x), (514) is according to the following:

$$g(x) = \begin{cases} ECW_{i-1} - 1 & \left| ReTx_{[\%]} < \lambda \right. \\ ECW_{i-1} & \left| \lambda \leq ReTx_{[\%]} < \delta \right. \\ ECW_{i-1} + 1 & \left| ReTx_{[\%]} \geq \delta \right. \end{cases}$$

where $ECW_{i-1}$ is the previous initial backoff parameter, ReTx is the retransmission percentage value, $\lambda$ is a first threshold and $\delta$ is a second threshold with $\lambda < \delta < 1$.

**11.** The device (200) of one of the preceding claims,
wherein the updating stage (205) is configured to update the initial backoff parameter, $ECW_{min}$, for the next monitoring interval per access category and per transmission direction.

**12.** The device (200) of one of the preceding claims,
wherein the updating stage (205) is configured to update the initial backoff parameter, $ECW_{min}$, for the next monitoring interval per service class, in particular different for the following service classes: voice, video, best effort and background.

**13.** A method (300) for updating an initial backoff parameter, $ECW_{min}$, the method comprising:

monitoring (301), during a monitoring interval, a plurality of data transmissions of a plurality of WLAN devices;
identifying (302) a number of successful data transmissions from the plurality of data transmissions, wherein the identifying (302) comprises identifying for each successful data transmission (402, 406, 410) a respective initial backoff parameter;
weighting (304) the initial backoff parameter, $ECW_{min}$, of the monitoring interval with a weighting function to provide a weighted backoff parameter, $ECW_{AVR}$ wherein the weighting (304) comprises averaging (413) the backoff parameters identified for each successful data transmission (402, 406, 410) to provide the weighted backoff parameter, $ECW_{AVR}$; and
updating (305) the initial backoff parameter, $ECW_{min}$, for a next monitoring interval based on the weighted backoff parameter, $ECW_{AVR}$.

**Patentansprüche**

1. Vorrichtung (200) zur Aktualisierung eines ursprünglichen Backoff-Parameters, $ECW_{min}$, wobei die Vorrichtung umfasst:

   eine Überwachungsstufe (201), die dazu konfiguriert ist, während eines Überwachungsintervalls eine Vielzahl von Datenübertragungen einer Vielzahl von WLAN-Vorrichtungen zu überwachen;
   eine Identifizierungsstufe (202), die dazu konfiguriert ist, eine Reihe erfolgreicher Datenübertragungen aus der Vielzahl von Datenübertragungen zu identifizieren, wobei die Identifizierungsstufe (202) dazu konfiguriert ist, für jede erfolgreiche Datenübertragung (402, 406, 410) einen jeweiligen Backoff-Parameter zu identifizieren;
   eine Gewichtungsstufe (204), die dazu konfiguriert ist, den ursprünglichen Backoff-Parameter, $ECW_{min}$, des Überwachungsintervalls mit einer Gewichtungsfunktion zu gewichten, um einen gewichteten Backoff-Parameter, $ECW_{AVR}$, bereitzustellen, wobei die Gewichtungsstufe (204) dazu konfiguriert ist, die Backoff-Parameter, die für jede erfolgreiche Datenübertragung (402, 406, 410) identifiziert wurden, zu mitteln (413), um den gewichteten Backoff-Parameter, $ECW_{AVR}$, bereitzustellen; und eine Aktualisierungsstufe (205), die dazu konfiguriert ist, den ursprünglichen Backoff-Parameter, $ECW_{min}$, für ein nächstes Überwachungsintervall basierend auf dem gewichteten Backoff-Parameter, $ECW_{AVR}$, zu aktualisieren.

2. Vorrichtung (200) nach Anspruch 1,
   wobei die Identifizierungsstufe (202) dazu konfiguriert ist, eine bestimmte Datenübertragung der Vielzahl von Datenübertragungen als eine erfolgreiche Übertragung zu identifizieren, für die eine Bestätigung (403, 407, 411) der bestimmten Datenübertragung empfangen wurde.

3. Vorrichtung (200) nach Anspruch 1,
   wobei die Aktualisierungsstufe (205) dazu konfiguriert ist, eine nichtlineare Funktion f(x) (414), insbesondere eine Schwellenwertfunktion, auf den gewichteten Backoff-Parameter, $ECW_{AVR}$, anzuwenden, um den aktualisierten Backoff-Parameter, $ECW_i$, für das nächste Überwachungsintervall bereitzustellen.

4. Vorrichtung (200) nach Anspruch 3, wobei die nichtlineare Funktion f(x) (414) Folgendem entspricht:

$$f(x) = \begin{cases} ECW_{i-1} - 1 & |ECW_{AVR} < \alpha + ECW_{i-1} \\ ECW_{i-1} & |\alpha + ECW_{i-1} \le ECW_{AVR} < \beta + ECW_{i-1} \\ ECW_{i-1} + 1 & |\beta + ECW_{i-1} \le ECW_{AVR} \end{cases}$$

   wobei $ECW_{i-1}$ der vorherige ursprüngliche Backoff-Parameter, $ECW_{min}$, des Überwachungsintervalls ist, $ECW_{AVR}$ der gewichtete Backoff-Parameter, $ECW_{AVR}$, ist $\alpha$ ein erster Schwellenwert ist und $\beta$ ein zweiter Schwellenwert ist, wobei $\alpha < \beta < 1$.

5. Vorrichtung (200) nach einem der vorhergehenden Ansprüche, wobei die Aktualisierungsstufe (205) zu Folgendem konfiguriert ist:

   Anwenden eines ersten Schwellenwertes und eines zweiten Schwellenwertes auf den ursprünglichen Backoff-Parameter, $ECW_{min}$, des Überwachungsintervalls, um den gewichteten Backoff-Parameter, $ECW_{AVR}$, des Überwachungsintervalls in eine erste Zone (603, 703), eine zweite Zone (602, 702) und eine dritte Zone (601, 701) zu unterteilen; und
   Aktualisieren des ursprünglichen Backoff-Parameters, $ECW_{min}$, für das nächste Überwachungsintervall basierend auf der jeweiligen Zone, in der sich der gewichtete Backoff-Parameter, $ECW_{AVR}$, befindet.

6. Vorrichtung (200) nach Anspruch 5, wobei die Aktualisierungsstufe (205) zu Folgendem konfiguriert ist:

   Erhöhen des ursprünglichen Backoff-Parameters, $ECW_{min}$, wenn sich der gewichtete Backoff-Parameter, $ECW_{AVR}$, in der ersten Zone (603, 703) befindet;
   Verwenden des gewichteten Backoff-Parameters, $ECW_{AVR}$, als ursprünglichen Backoff-Parameter, $ECW_{min}$, für das nächste Überwachungsintervall, wenn sich der gewichtete Backoff-Parameter, $ECW_{AVR}$, in der zweiten Zone (602, 702) befindet; und

Verringern des ursprünglichen Backoff-Parameters, $ECW_{min}$, wenn sich der gewichtete Backoff-Parameter, $ECW_{AVR}$, in der dritten Zone (601, 701) befindet;

7. Vorrichtung (200) nach Anspruch 1 oder 2,
wobei die Überwachungsstufe (201) dazu konfiguriert ist, während des Überwachungsintervalls eine Vielzahl von Wiederholungsübertragungsmerker, Re-Tx, zu überwachen.

8. Vorrichtung (200) nach Anspruch 7
wobei die Gewichtungsstufe (204) dazu konfiguriert ist, die Vielzahl von Wiederholungsübertragungsmerkern, Re-Tx, zu mitteln (513), um einen Prozentwert der Wiederholungsübertragungen (515) bereitzustellen.

9. Vorrichtung (200) nach Anspruch 8,
wobei die Aktualisierungsstufe (205) dazu konfiguriert ist, eine nichtlineare Funktion g(x) (514), insbesondere eine Schwellenwertfunktion, auf den Prozentwert der Wiederholungsübertragungen (515) anzuwenden, um den aktualisierten Backoff-Parameter, $ECW_i$, für das nächste Überwachungsintervall bereitzustellen.

10. Vorrichtung (200) nach Anspruch 9, wobei die nichtlineare Funktion g(x) (514) Folgendem entspricht:

$$g(x) = \begin{cases} ECW_{i-1} - 1 & ReTx_{[\%]} < \lambda \\ ECW_{i-1} & \lambda \le ReTx_{[\%]} < \delta \\ ECW_{i-1} + 1 & ReTx_{[\%]} \ge \delta \end{cases}$$

wobei $ECW_{i-1}$ der vorherige ursprüngliche Backoff-Parameter ist, ReTx der Prozentwert der Wiederholungsübertragungen ist, $\lambda$ ein erster Schwellenwert ist und $\delta$ ein zweiter Schwellenwert ist, wobei $\lambda < \delta < 1$.

11. Vorrichtung (200) nach einem der vorhergehenden Ansprüche,
wobei die Aktualisierungsstufe (205) dazu konfiguriert ist, den ursprünglichen Backoff-Parameter, $ECW_{min}$, für das nächste Überwachungsintervall nach Zugangskategorie und nach Übertragungsrichtung zu aktualisieren.

12. Vorrichtung (200) nach einem der vorhergehenden Ansprüche,
wobei die Aktualisierungsstufe (205) dazu konfiguriert ist, den ursprünglichen Backoff-Parameter, $ECW_{min}$, für das nächste Überwachungsintervall nach Dienstklasse zu aktualisieren, insbesondere unterschiedlich für die folgenden Dienstklassen: Sprache, Video, Best Effort und Hintergrund.

13. Verfahren (300) zur Aktualisierung eines ursprünglichen Backoff-Parameters, $ECW_{min}$, wobei das Verfahren umfasst:

Überwachen (301) einer Vielzahl von Datenübertragungen einer Vielzahl von WLAN-Vorrichtungen während eines Überwachungsintervalls;
Identifizieren (302) einer Reihe erfolgreicher Datenübertragungen aus der Vielzahl von Datenübertragungen zu identifizieren, wobei das Identifizieren (302) Identifizieren eines jeweiligen Backoff-Parameters für jede erfolgreiche Datenübertragung (402, 406, 410) umfasst;
Gewichten (304) des ursprünglichen Backoff-Parameters, $ECW_{min}$, des Überwachungsintervalls mit einer Gewichtungsfunktion zur Bereitstellung eines gewichteten Backoff-Parameters, $ECW_{AVR}$, wobei das Gewichten (304) Mitteln (413) der Backoff-Parameter umfasst, die für jede erfolgreiche Datenübertragung (402, 406, 410) identifiziert wurden, um den gewichteten Backoff-Parameter, $ECW_{AVR}$, bereitzustellen; und
Aktualisieren (305) des ursprünglichen Backoff-Parameters, $ECW_{min}$, für ein nächstes Überwachungsintervall basierend auf dem gewichteten Backoff-Parameter, $ECW_{AVR}$.

**Revendications**

1. Dispositif (200) pour mettre à jour un paramètre de temporisation initial, $ECW_{min}$, le dispositif comprenant :

   un étage de surveillance (201), configuré pour surveiller, pendant un intervalle de surveillance, une pluralité de transmissions de données d'une pluralité de dispositifs WLAN ;
   un étage d'identification (202), configuré pour identifier un certain nombre de transmissions de données réussies à partir de la pluralité de transmissions de données, l'étage d'identification (202) étant configuré pour identifier pour chaque transmission de données réussie (402, 406, 410) un paramètre de temporisation respectif ;
   un étage de pondération (204), configuré pour pondérer le paramètre de temporisation initial, $ECW_{min}$ de l'intervalle de surveillance avec une fonction de pondération pour fournir un paramètre de temporisation pondéré, $ECW_{AVR}$, l'étage de pondération (204) étant configuré pour moyenner (413) les paramètres de temporisation identifiés pour chaque transmission de données réussie (402, 406, 410) pour fournir le paramètre de temporisation pondéré, $ECW_{AVR}$ ; et
   un étage de mise à jour (205) configuré pour mettre à jour le paramètre de temporisation initial, $ECW_{min}$, pour un intervalle de surveillance suivant, sur la base du paramètre de temporisation pondéré, $ECW_{AVR}$.

2. Dispositif (200) selon la revendication 1,
   l'étage d'identification (202) étant configuré pour identifier une transmission de données particulière parmi la pluralité de transmissions de données en tant que transmission réussie pour laquelle transmission particulière un accusé de réception (403, 407, 411) a été reçu.

3. Dispositif (200) selon la revendication 1,
   l'étage de mise à jour (205) étant configuré pour appliquer une fonction non linéaire, f(x), (414), en particulier une fonction de seuil, au paramètre de temporisation pondéré, $ECW_{AVR}$, afin de fournir le paramètre de temporisation mis à jour, $ECW_i$, pour l'intervalle de surveillance suivant.

4. Dispositif (200) selon la revendication 3, la fonction non linéaire, f(x), (414) étant selon ce qui suit :

$$f(x) = \begin{cases} ECW_{i-1} - 1 & |ECW_{AVR} < \alpha + ECW_{i-1} \\ ECW_{i-1} & |\alpha + ECW_{i-1} \leq ECW_{AVR} < \beta + ECW_{i-1} \\ ECW_{i-1} + 1 & |\beta + ECW_{i-1} \leq ECW_{AVR} \end{cases}$$

où $ECW_{i-1}$ est le paramètre de temporisation initial précédent, $ECW_{min}$, de l'intervalle de surveillance, $ECW_{AVR}$ est le paramètre de temporisation pondéré, $ECW_{AVR}$, $\alpha$ est un premier seuil et $\beta$ est un second seuil avec $\alpha < \beta < 1$.

5. Dispositif (200) selon l'une des revendications précédentes, l'étage de mise à jour (205) étant configuré :

   pour appliquer un premier seuil et un second seuil au paramètre de temporisation initial, $ECW_{min}$, de l'intervalle de surveillance pour diviser le paramètre de temporisation pondéré, $ECW_{AVR}$, de l'intervalle de surveillance dans une première zone (603, 703), une deuxième zone (602, 702) et une troisième zone (601, 701) ; et
   pour mettre à jour le paramètre de temporisation initial, $ECW_{min}$, pour l'intervalle de surveillance suivant sur la base de la zone respective dans laquelle le paramètre de temporisation pondéré, $ECW_{AVR}$, réside.

6. Dispositif (200) selon la revendication 5, l'étage de mise à jour (205) étant configuré :

   pour augmenter le paramètre de temporisation initial, $ECW_{min}$, si le paramètre de temporisation pondéré, $ECW_{AVR}$, réside dans la première zone (603, 703) ;
   pour utiliser le paramètre de temporisation pondéré, $ECW_{AVR}$, en tant que paramètre de temporisation initial, $ECW_{min}$, pour l'intervalle de surveillance suivant si le paramètre de temporisation pondéré, $ECW_{AVR}$, réside dans la deuxième zone (602, 702) ; et
   pour diminuer le paramètre de temporisation initial, $ECW_{min}$, si le paramètre de temporisation pondéré, $ECW_{AVR}$, réside dans la troisième zone (601, 701).

**7.** Dispositif (200) selon la revendication 1 ou 2,
l'étage de surveillance (201) étant configuré pour surveiller, pendant l'intervalle de surveillance, une pluralité de drapeaux de retransmission, Re-Tx.

**8.** Dispositif (200) selon la revendication 7,
l'étage de pondération (204) étant configuré pour moyenner (513) la pluralité de drapeaux de retransmission, Re-Tx, pour fournir une valeur de pourcentage de retransmission (515).

**9.** Dispositif (200) selon la revendication 8,
l'étage de mise à jour (205) étant configuré pour appliquer une fonction non linéaire g(x), (514), en particulier une fonction de seuil, à la valeur de pourcentage de retransmission (515) afin de fournir le paramètre de temporisation mis à jour, ECWi, pour l'intervalle de surveillance suivant.

**10.** Dispositif (200) selon la revendication 9, la fonction non linéaire, g (x), (514) étant selon ce qui suit :

$$g(x) = \begin{cases} ECW_{i-1} - 1 & |ReTx_{[\%]} < \lambda \\ ECW_{i-1} & |\lambda \leq ReTx_{[\%]} < \delta \\ ECW_{i-1} + 1 & |ReTx_{[\%]} \geq \delta \end{cases}$$

où $ECW_{i-1}$ est le paramètre de temporisation initial précédent, ReTx est la valeur de pourcentage de retransmission, $\lambda$ est un premier seuil et $\delta$ est un second seuil avec $\lambda < \delta < 1$.

**11.** Dispositif (200) selon l'une des revendications précédentes,
l'étage de mise à jour (205) étant configuré pour mettre à jour le paramètre de temporisation initial, $ECW_{min}$, pour l'intervalle de surveillance suivant par catégorie d'accès et par direction de transmission.

**12.** Dispositif (200) selon l'une des revendications précédentes,
l'étage de mise à jour (205) étant configuré pour mettre à jour le paramètre de temporisation initial, $ECW_{min}$, pour l'intervalle de surveillance suivant par classes de service, en particulier différentes pour les classes de service suivantes : voix, vidéo, service au mieux et arrière-plan.

**13.** Procédé (300) pour mettre à jour un paramètre de temporisation initial $ECW_{min}$, le procédé comprenant :

la surveillance (301), pendant un intervalle de surveillance, d'une pluralité de transmissions de données d'une pluralité de dispositifs WLAN ;
l'identification (302) d'un certain nombre de transmissions de données réussies à partir de la pluralité de transmissions de données, l'identification (302) comprenant l'identification pour chaque transmission de données réussie (402, 406, 410) d'un paramètre de temporisation initial respectif ;
la pondération (304) du paramètre de temporisation initial, $ECW_{min}$, de l'intervalle de surveillance avec une fonction de pondération pour fournir un paramètre de temporisation pondéré, $ECW_{AVR}$, la pondération (304) comprenant le fait de moyenner (413) les paramètres de temporisation identifiés pour chaque transmission de données réussie (402, 406, 410) pour fournir le paramètre de temporisation pondéré, $ECW_{AVR}$ ; et
la mise à jour (305) du paramètre de temporisation initial, $ECW_{min}$, pour un intervalle de surveillance suivant sur la base du paramètre de temporisation pondéré, $ECW_{AVR}$.

Fig. 1

200

monitoring stage — 201

identifying stage — 202

deriving stage — 203

weighting stage — 204

updating stage — 205

Fig. 2

300

| monitoring data transmissions |
| --- |

301

| identifying successful data transmissions |
| --- |

302

| Deriving weighting function |
| --- |

303

| weighting backoff parameter with weighting function to provide weighted backoff parameter |
| --- |

304

| updating backoff parameter based on weighted backoff parameter |
| --- |

305

Fig. 3

Fig. 4

Fig. 5

Fig. 6

Fig. 7

800

Efficiency Vs Number of Active Clients    806

Fig. 8

900

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011093906 A1

- WO 2013185858 A1